# EUROPÄISCHE PATENTANMELDUNG

(11) **EP 4 194 890 A1**
(43) Veröffentlichungstag der Anmeldung: **14.06.2023**
(21) Anmeldenummer: 21213433.2
(22) Anmeldetag: 09.12.2021
(51) Int. Cl.: G01S 7/486

(54) **OPTISCHER SENSOR**

(71) Anmelder: Pepperl+Fuchs SE, 68307 Mannheim (DE)
(72) Erfinder: KLEMT, Hans-Jürgen, 12277 Berlin (DE)
(74) Vertreter: Schiffer, Axel Martin

(57) **Zusammenfassung**

Die Erfindung betrifft einen optischen Sensor zum Nachweisen von Objekten in einem Überwachungsbereich mit einem Sender zum Aussenden von Licht, insbesondere von Lichtpulsen, in den Überwachungsbereich, mit einem Detektor zum Nachweisen von von einem Objekt im Überwachungsbereich zurückgestrahltem Licht, insbesondere von Lichtpulsen, und mit einer Steuer- und Auswerteeinheit zum Ansteuern des Senders und zum Auswerten des von dem Detektor nachgewiesenen Lichts, und zum Ermitteln einer Entfernung des Objekts nach dem Laufzeitprinzip. Der optische Sensor ist erfindungsgemäß dadurch gekennzeichnet, dass strahlaufwärts vor dem Detektor ein Diffusor vorhanden ist.

## Beschreibung

Die vorliegende Erfindung betrifft einen optischen Sensor zum Nachweisen von Objekten in einem Überwachungsbereich nach dem Oberbegriff des Anspruchs 1.

Ein gattungsgemäßer optischer Sensor zum Nachweisen von Objekten in einem Überwachungsbereich weist folgende Komponenten auf: einen Sender zum Aussenden von Licht, insbesondere von Lichtpulsen, in den Überwachungsbereich, einen Detektor zum Nachweisen von Licht, welches von einem Objekt im Überwachungsbereich zurückgestrahlt wurde, insbesondere von zurückgestrahlten Lichtpulsen, und eine Steuer- und Auswerteeinheit zum Ansteuern des Senders, zum Auswerten des von dem Detektor nachgewiesenen Lichts und zum Ermitteln einer Entfernung des Objekts nach dem Laufzeitprinzip.

Optische Sensoren dieser Art sind in vielen Ausgestaltungen bekannt. Bei vielen Anwendungen im industriellen Bereich soll die Entfernung zu einem Objekt optisch durch Lichtlaufzeitmessung millimetergenau erfasst werden. Bei der Entfernungsmessung nach dem Lichtlaufzeitprinzip oder TOF-Prinzip (englisch: Time-Of-Flight-Prinzip) wird von dem Sender ein optisches Signal ausgesandt, welches auf ein Objekt trifft, dessen Entfernung bestimmt werden soll. Das vom Objekt reflektierte Signal wird mit einem Detektor nachgewiesen. Je nach Abstand zum Messobjekt verändert sich die Laufzeit des optischen Signals. Aus der Signallaufzeit und der Lichtgeschwindigkeit im betreffenden Medium, üblicherweise Luft, lässt sich die Entfernung bestimmen. Dabei entsprechen 6,6ps Signallaufzeit etwa einer Entfernung von 1,0 mm.

Wegen der kleinen zu vermessenden Zeiten, wegen der kurzen Zeitdauern der zu vermessenden Lichtsignale als solche und wegen der vergleichsweise kleinen Energiemengen wird, um das Signal-zu-Rausch-Verhältnis zu steigern, üblicherweise über eine Vielzahl von Messungen gemittelt.

Durch das Mitteln über viele Messungen können zwar statistische Meßunsicherheiten, nicht aber systematische Meßunsicherheiten ausgeglichen werden. Für systematische Meßunsicherheiten müssen die Gegebenheiten der Messung als solcher im Einzelnen betrachtet werden.

Aus elementaren optischen Gründen und wegen der konkreten Physik des Photonennachweises, kann die aktive Fläche eines Detektors nicht beliebig klein gewählt werden. Das führt aber dazu, dass es selbst bei nominal gleichem zeitlichen Verlauf der nachzuweisenden Lichtintensität zu unterschiedlichen Messsignalen kommen kann, je nachdem, wo das nachzuweisende Licht auf die aktive Fläche der Photodiode auftrifft. Ein wesentlicher Grund dafür ist die je nach Auftreffort unterschiedliche Impedanz des Detektors. Auch die Schärfe des Lichtflecks auf der aktiven Fläche des Detektors spielt eine Rolle. Die Schärfe der Lichtfleckabbildung auf der aktiven Fläche hängt hauptsächlich von der Entfernung eines Objekts zur Empfängeroptik ab, aber auch Temperatur, Verschmutzung und mikromechanische Veränderungen spielen eine Rolle. Zwei im zeitlichen Verlauf gesehen identische Lichtpulse, welche jedoch eine unterschiedlich scharfe Abbildung (Fokussierung) aufweisen, generieren infolge einer unterschiedlich ausgeleuchteten aktiven Fläche des Detektors einen unterschiedlichen Elektronenausstoß.

Diese Messunsicherheit an sich ist bekannt und es werden zu deren Verringerung üblicherweise Photodioden mit einer Ringelektrode verwendet. Gleichwohl kommt es auch bei solchen Photodioden zu Unterschieden bei den gemessenen Empfangszeitpunkten für die Lichtpulse in der Größenordnung von Pikosekunden.

Gängige Praxis ist bisher, diese auftretenden Distanzmessunischerheiten für jedes einzelne Gerät durch zeitaufwändige und fertigungstechnisch anspruchsvolle Kompensationsläufe zu kalibrieren.

Diese Kalibrierungen haben jedoch nur längeren Bestand, sofern hochwertige Komponenten, wie ein langzeit- und temperaturstabiler Tubus, hochwertige Glaslinsen im Sensor zum Einsatz kommen. Setzt man günstige Komponenten aus Plastik ein, treten mit der Zeit mechanische Veränderungen der Optronikkomponente auf. Diese können zum Beispiel Verschmutzung, Linsentrübung, Materialschrumpfung, unsymmetrische Spannungs- und Entspannungsprozesse der Optik, nachlassende Verspiegelung eines Hohlspiegels sein. Das führt dazu, dass die ursprünglich eingelernte Kompensation langfristig gesehen nicht mehr passend ist.

Als Optronik oder Optronikkomponente wird eine Baugruppe bezeichnet, die optische und elektronische Komponenten enthält.

Als eine Aufgabe der vorliegenden Erfindung kann angesehen werden, einen optischen Sensor der oben angegebenen Art bereitzustellen, bei dem die Bestimmung eines Empfangszeitpunkts eines Lichtpulses zuverlässiger möglich ist.

Diese Aufgabe wird durch den optischen Sensor mit den Merkmalen des Anspruchs 1 gelöst.

Der optischer Sensor der oben angegebenen Art ist erfindungsgemäß dadurch weitergebildet, dass strahlaufwärts vor dem Detektor ein Diffusor vorhanden ist.

Vorteilhafte Ausgestaltungen des erfindungsgemäßen Sensors werden im Folgenden, insbesondere im Zusammenhang mit den abhängigen Ansprüchen und den Figuren erläutert.

Als eine wesentliche Idee der vorliegenden Erfindung kann angesehen werden, dass mit dem Diffusor eine Komponente in den Strahlengang eingebracht wird, die das nachzuweisende Licht möglichst gleichmäßig auf die aktive Fläche des Detektors verteilt. Der Diffusor kann auch als optischer Diffusor bezeichnet werden.

Bei dem erfindungsgemäßen optischen Sensor wird als wesentlicher Vorteil erreicht, dass die Intensitätsverteilung des nachzuweisenden Lichts auf der aktiven Fläche des Detektors homogener, mithin gleichmäßiger gemacht wird und damit auch die Zuordnung eines Empfangszeitpunkts zu einem gemessenen zeitlichen Intensitätsverlauf zuverlässiger wird. Optische und/oder mechanische Änderungen des Optronikträgers fallen so weniger ins Gewicht. Das optische System wird langzeitstabiler und werkseitige Kompensationen können eventuell sogar ganz entfallen.

Als weiterer Vorteil der Erfindung wird für die Messung von Objekten im Nahbereich erreicht. Wenn das Zielobjekt in den Nahbereich verschoben wird, wird im Stand der

Technik auch das auf der aktiven Fläche projizierte Sendesignal an eine andere Stelle auf der aktiven Fläche verschoben. Position und Schärfe der Lichtfleckabbildung verändern sich also. Gegebenenfalls erreichen die von dem Objekt zurückgestrahlten Lichtstrahlen den Detektor überhaupt nicht mehr. Jedenfalls ist eine Kompensation der Messunsicherheit im Grenzbereich, bei dem sich der Spot halb auf der aktiven Fläche des Detektors und halb daneben befindet, äußerst ungenau.

Bei dem erfindungsgemäßen Sensor wird die Stabilität im Nahbereich verbessert und außerdem kann die minimale Entfernung, in der Objekte noch nachgewiesen werden können, reduziert werden. Wesentlicher Grund dafür ist, dass Lichtstrahlen, die von Objekten in kleinem Abstand von dem optischen Sensor zurückgestrahlt werden, bei bekannten Sensoren den Detektor wegen eines zu großen Winkels relativ zur optischen Achse verfehlen. Beim erfindungsgemäßen optischen Sensor können auch für Objekte im extremen Nahbereich noch mindestens Teile dieses Licht durch den erfindungsgemäß vorhandenen Diffusor in Richtung des Detektors geleitet und somit nachgewiesen werden. Auf eine Kompensation für den im Nahbereich, die im Stand der Technik notwendig ist, kann gegebenenfalls verzichtet werden. Distanzmessungen werden möglich bis in den extremen Nahbereich, je nach Auslegung bis zu einer Distanz von Null.

Die Diffusoren sind einfach in bestehende System nachrüstbar, sie sind kostengünstig, variabel einsetzbar und anpassbar.

Grundsätzlich ist auch möglich, dass im Strahlengang für das nachzuweisende Licht mehrere Diffusoren verbaut werden.

Gegebenenfalls muss beachtet werden, dass je nach Anbringung und Öffnungswinkel des Diffusors im Fernbereich weniger Empfangsenergie zur Verfügung steht.

Als Licht wird für die Zwecke der vorliegenden Anmeldung elektromagnetische Strahlung verstanden, insbesondere im sichtbaren Bereich und angrenzenden Bereichen. Als Sender können grundsätzlich bekannte Lichtquellen verwendet werden, welche die elektromagnetische Strahlung im gewünschten Wellenlängenbereich und mit der gewünschten Intensität liefern. Typischerweise werden Leuchtdioden, Halbleiterlaser oder VCSEL (vertical-cavity surface-emitting laser) im sichtbaren oder Infrarot-Bereich verwendet.

Als Detektoren können grundsätzlich bekannte Komponenten verwendet werden, die für die elektromagnetische Strahlung hinreichend empfindlich sind und eine ausreichende Zeitauflösung aufweisen. Typischerweise werden Halbleiterkomponenten, beispielsweise Photodioden, PIN-Dioden, Avalanche-Photodioden oder SPAD-Dioden verwendet. Bevorzugt kann der Detektor eine Ringelektrode aufweisen.

Der Überwachungsbereich ist derjenige Bereich, in dem mit dem erfindungsgemäßen optischen Sensor Objekte nachgewiesen werden können.

Die nachzuweisenden Objekte können das von dem Sender kommende Licht direkt oder indirekt zurückreflektieren oder zurückstreuen. Wesentlich ist, dass wenigstens teilweise die eingestreute Lichtenergie zurückgestrahlt und von dem Detektor nachgewiesen wird. Das nachzuweisende Objekt kann grundsätzlich beliebiger Natur sein. Es ist klar, dass das nachzuweisende Objekt mindestens ein gewisses Reflexionsvermögen für die verwendete elektromagnetische Strahlung aufweisen muss, also nicht vollständig schwarz sein darf.

Als Steuer- und Auswerteeinheit könnnen grundsätzlich bekannte, insbesondere programmierbare, Komponenten, wie Mikrocontroller oder äquivalente Bausteine, zum Einsatz kommen.

Die Komponenten des erfindungsgemäßen optischen Sensors können in einem gemeinsamen Gehäuse untergebracht sein. Grundsätzlich ist aber auch möglich, dass sich der Sender und der Detektor in unterschiedlichen Gehäusen befinden.

Die Entfernung des Objekts ergibt sich aus der Laufstrecke des von dem Sender ausgesendeten Lichts hin zum Objekt und zurück zum Detektor. In aller Regel, dann nämlich, wenn sich die Komponenten des erfindungsgemäßen optischen Sensors in einem gemeinsamen Gehäuse befinden, ist die Entfernung des Objekts der Abstand zum optischen Sensor selbst.

Für die Beschreibung der Komponenten im Strahlengang werden im folgenden die Begriffe strahlaufwärts und strahlabwärts verwendet. Damit werden jeweils Orte von einzelnen Komponenten relativ zueinander bezogen auf die Laufrichtung des Lichts angegeben. In diesem Sinn liegt beispielsweise der Sender strahlaufwärts von dem Objekt und der Detektor strahlabwärts von dem Objekt.

Als Diffusor im Sinn der vorliegenden Beschreibung wird eine optische Komponente verstanden, welche ein mindestens teilweise gerichtetes Strahlenbündel in eine Mehrzahl von Einzelstrahlen oder einzelnen Strahlenbündeln überführt. Diese Einzelstrahlen oder einzelnen Strahlenbündeln können oder müssen insbesondere untereinander keine definierte Ausrichtung mehr haben. Ein optimal kollimiertes Strahlenbündel würde man als vollständig gerichtetes Strahlenbündel, ein konvergentes Strahlenbündel als teilweise gerichtetes Strahlenbündel bezeichnen.

Der Diffusor kann beispielsweise einen kleinen Öffnungswinkel (z.B. 5 bis 30° Grad) aufweisen. Durch Hinzufügen eines optischen Diffusors wenige mm von der aktiven Fläche des Detektors beispielsweise dem Diodensubstrat einer Photodiode, entfernt, wird das einfallende Licht weichgezeichnet und gleichmäßiger auf die aktive Fläche des Detektors verteilt. Durch Veränderung des Abstands zur aktiven Fläche des Detektors und des Öffnungswinkels des Diffusors kann sehr einfach die Beleuchtungssituation eingestellt oder optimiert werden. Diffusoren sind bezogen auf ihre Eigenschaften sehr temperaturstabil, langzeitstabil und preiswert.

Grundsätzlich ist möglich, dass der Diffusor reflektierender Natur ist, dass also das zu detektierende Licht von dem Diffusor zurückgestrahlt wird. Dabei kann als Vorteil erreicht werden, dass vergleichsweise wenig Lichtintensität durch den Diffusor an sich verloren geht.

Bei bevorzugten Varianten des erfindungsgemäßen optischen Sensors wird der Diffusor von dem zu detektierenden Licht durchstrahlt.

Besonders bevorzugt wird der Diffusor in einem Abstand zu dem Detektor positioniert, der einerseits eine besonders gute Wirkung des Diffusors im Hinblick auf die Überführung des einkommenden Strahlbündels in viele Strahlen oder Strahlenbündel gestattet und andererseits nicht so groß ist, dass Licht die aktive Fläche des Detektors verfehlt. Besonders bevorzugt ist der Diffusor im Strahlengang zwischen einer Empfangsoptik und dem Detektor angeordnet. Die Empfangsoptik kann beispielsweise durch eine einzelne Linse verwirklicht sein.

Vorteilhaft ist der Diffusor so geartet und im Strahlengang angeordnet, dass ein Strahlengang des nachzuweisenden Lichts strahlabwärts von dem Diffusor eine kleinere Konvergenz aufweist als strahlaufwärts von dem Diffusor.

Bei weiteren bevorzugten Ausgestaltungen des erfindungsgemäßen optischen Sensor ist der Diffusor ein lichtformender Diffusor. Damit ist gemeint, dass das einkommende Licht nicht nur in viele Einzelstrahlen oder viele einzelne Strahlbündel zerlegt wird, die relativ zueinander nicht mehr definiert orientiert sind, sondern dass dem vom Diffusor kommenden Licht zusätzlich beispielsweise ein bestimmter Strahlquerschnitt aufgeprägt wird.

Dabei ist bevorzugt, wenn der der Diffusor einkommendes Licht in einen Lichtstrahl überführt, dessen Querschnitt an die Form der Detektorfläche angepasst ist. Idealerweise sind der Strahlquerschnitt des nachzuweisenden Lichts und die aktive Fläche des Detektors am Auftreffort des Lichts auf den Detektor kongruent. Beispielsweise kann das Licht strahlabwärts von dem Diffusor ein rechteckiges, quadratisches oder elliptisches Strahlprofil aufweisen.

Bei einer einfachen und kostengünstigen Lösung kann der Diffusor beispielsweise eine Streuscheibe sein oder aufweisen. Streuscheiben sind in der Optik für vielfältige Anwendungen, beispielsweise in der Fotografie oder Mikroskopie bekannt.

Es ist auch möglich, dass eine Empfangsoptik und der Diffusor als ein integrales oder einstückiges Bauteil gebildet sind. Beispielsweise kann der Diffusor teilweise oder vollständig an einer Seite einer Empfangsoptik, insbesondere einer Linse, etwa durch eine aufgerauhte Fläche der Linse der Empfangsoptik, gebildet sein.

Eine weitere bevorzugte Variante des erfindungsgemäßen optischen Sensors ist dadurch gekennzeichnet, dass der Diffusor ein Mikrolinsenarray ist oder aufweist. Bei Mikrolinsenarrays wird eine vergleichsweise hohe Transmission erreicht, d. h., die Verluste an Lichtintensität sind gering.

Zur Homogenisierung des Lichtbündels der nachzuweisenden Strahlung kann das Mikrolinsenarray insbesondere so geartet sein, dass die Linsen des Mikrolinsenarrays unregelmäßig in einer Ebene angeordnet sind und/oder dass die Linsen des Mikrolinsenarrays unterschiedliche Brennweiten und/oder nichtparallele optische Achsen aufweisen.

Eine weitere bevorzugte Variante des erfindungsgemäßen optischen Sensors ist dadurch gekennzeichnet, dass der Diffusor teilweise oder vollständig holographisch gebildet ist und insbesondere eine teilweise oder vollständig holographisch gebildete Oberflächenstruktur aufweist. Auch bei holographisch gebildeten Diffusoren können vergleichsweise hohe Transmissionen, mithin geringe Verluste der Lichtintensität erreicht werden.

Grundsätzlich kann der Diffusor aus Glasmaterialien hergestellt werden. Besonders bevorzugt werden aber aus Kunststoff gebildete Diffusoren verwendet.

Durch die Verwendung eines Diffusors wird die effektive Apertur der Empfangsoptik im Prinzip vergrößert, weil auch Lichtanteile auf den Detektor gelangen, die den Detektor ohne den Diffusor verfehlen würden. Im Hinblick auf einen reduzierten minimalen Abstand, in dem Objekte nachgewiesen werden können, kann das eine erwünschte Wirkung sein. Je nach Anbringung und Öffnungswinkel des Diffusors, kann sich der Öffnungswinkel der Optronikkomponente so vergrößern, dass Streulicht aus der Umgebung auf den Detektor trifft und damit das Signal-zu-Rausch-Verhältnis verschlechtert. Unter diesem Gesichtspunkt der zu vermeidenden Störanfälligkeit für Fremdlicht kann es von Vorteil sein, im Strahlengang vor dem Detektor, insbesondere strahlaufwärts vor Diffusor und insbesondere zwischen einer Empfangsoptik und dem Diffusor, wenn mindestens eine Blende vorhanden ist. Diese Blende oder eine weitere Blende könnte auch zwischen dem Diffusor und dem Detektor angeordnet sein. Mit einer Blende vor dem Diffusor kann der Öffnungswinkel der Optronik einfach angepasst werden.

Die mindestens eine Blende kann bevorzugt eine einstellbare Blende und insbesondere eine elektronisch einstellbare Blende sein. Beispielsweise kann die Blende ein steuerbares Flüssigkristall-Element (LCD-Element) aufweisen.

Weitere Vorteile und Merkmale der vorliegenden Erfindung im Folgenden im Zusammenhang mit den Figuren erläutert. Darin zeigt:
- Figur 1:: eine schematische Darstellung eines gattungsgemäßen optischen Sensors aus dem Stand der Technik zur Erläuterung der durch die Erfindung gelösten Aufgabe;
- Figur 2:: eine schematische Darstellung eines Detektors bei einem gattungsgemäßen optischen Sensor zur Erläuterung der durch die Erfindung gelösten Aufgabe;
- Figur 3:: eine weitere schematische Darstellung des gattungsgemäßen optischen Sensors aus Figur 1 zur Erläuterung der durch die Erfindung gelösten Aufgabe;
- Figur 4:: eine schematische Darstellung eines Ausführungsbeispiels eines erfindungsgemäßen optischen Sensors in einer ersten Messsituation; und
- Figur 5:: eine schematische Darstellung des erfindungsgemäßen optischen Sensors aus Figur 4 in einer zweiten Messsituation.

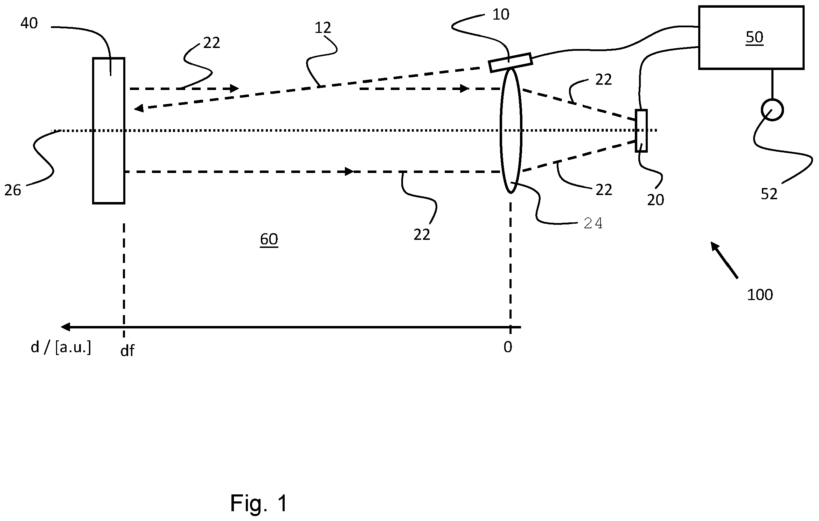

Zunächst wird mit Bezug auf die Figuren 1 bis 3 ein gattungsgemäßer optischer Sensor 100 zum Nachweisen von Objekten 40 in einem Überwachungsbereichs 60 erläutert.

Ein gattungsgemäßer optischer Sensor 100 beinhaltet zunächst einen Sender 10 zum Aussenden von Licht, insbesondere von Lichtpulsen 12, in den Überwachungsbereich 60 und einen Detektor 20 zum Nachweisen des von dem Objekt 40 zurückgestrahlten Lichts, insbesondere von zurückgestrahlten Lichtpulsen 22. Zum Leiten der zurückgestrahlten Lichtpulse 22 auf den Detektor 20 ist eine Empfangsoptik 24 mit einer optischen Achse 26 vorhanden. Dabei kann es sich beispielsweise um eine einzige Linse handeln.

Zum Ansteuern des Senders 10 und zum Auswerten des von dem Detektor 20 nachgewiesenen Lichts ist eine Steuer- und Auswerteeinheit 50, beispielsweise ein Mikrocontroller, vorhanden. Aus der Differenz der Empfangszeitpunkte und der zugehörigen Aussendezeitpunkte der Lichtpulse berechnet die Steuer- und Auswerteeinheit 50 unter Verwendung der Lichtgeschwindigkeit einen Abstand df des Objekts 40 von dem optischen Sensor. In dem in Figur 1 gezeigten Beispiel wird die Entfernung relativ zu der Empfangsoptik 24 gemessen. Die Steuer- und Auswerteeinheit 50 kann über eine Schnittstelle 52 mit anderen Einheiten, beispielsweise mit einer übergeordneten Steuerung, interagieren. Beispielsweise kann über die Schnittstelle 52 ein Signal "Objekt in einem Abstand X nachgewiesen" ausgegeben werden.

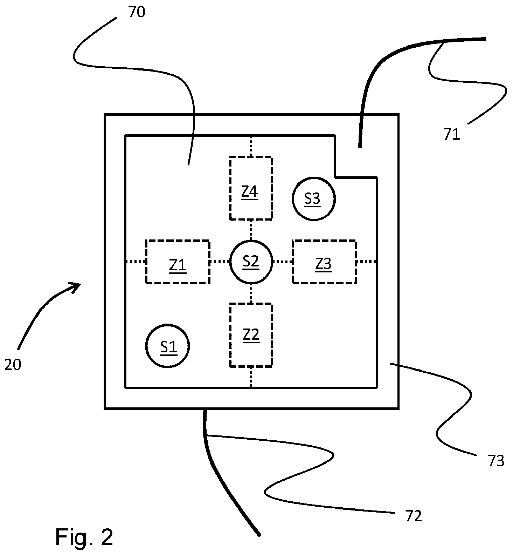

Für die Genauigkeit der Abstandsbestimmung spielt die Zuordnung eines Empfangszeitpunkts zu einem von dem Detektor 20 gemessenen zeitlichen Intensitätsverlauf eine wesentliche Rolle. Eine systematische Fehlerquelle dabei entsteht durch die Gegebenheiten der Lichtdetektion. Dieses wird mit Bezug auf Figur 2 erläutert. Figur 2 zeigt eine schematische Ansicht eines Detektors 20, beispielsweise eine Photodiode mit einer aktiven Fläche 70, einer Ringelektrode 73 und zwei Bonddrähten 71, 72 zum Verbinden der Photodiode mit den Anschlüssen des Bauelements. Schematisch gezeigt sind drei verschiedene Lichtflecken S1, S2 , S3 auf der aktiven Fläche 70. Die Lichtflecken S1, S2 , S3 können beispielsweise zu unterschiedlichen Objekten 40 im Überwachungsbereich 60 gehören, die an den von den Lichtpulsen 12 jeweils beleuchteten Bereichen unterschiedliche Reflektivitäten aufweisen, sich ansonsten aber faktisch in demselben Abstand vor dem optischen Sensor 100 befinden. Wegen der jeweils unterschiedlichen Impedanzen, die für die durch die Lichtflecken S1, S2, S3 freigesetzten Ladungsmengen jeweils wirksam werden, wird das Empfangssignal deshalb für jeden der drei Lichtflecken S1, S2, S3 im allgemeinen eine unterschiedliche Form aufweisen. Deshalb wird auch der den jeweiligen Signalen zugeordnete Empfangszeitpunkt in der Regel unterschiedlich sein, sodass man für Objekte, die sich faktisch in demselben Abstand vom optischen Sensor 100 befinden, bei der Messung unterschiedliche Abstandswerte erhalten würde. Hier schafft die vorliegende Erfindung Abhilfe.

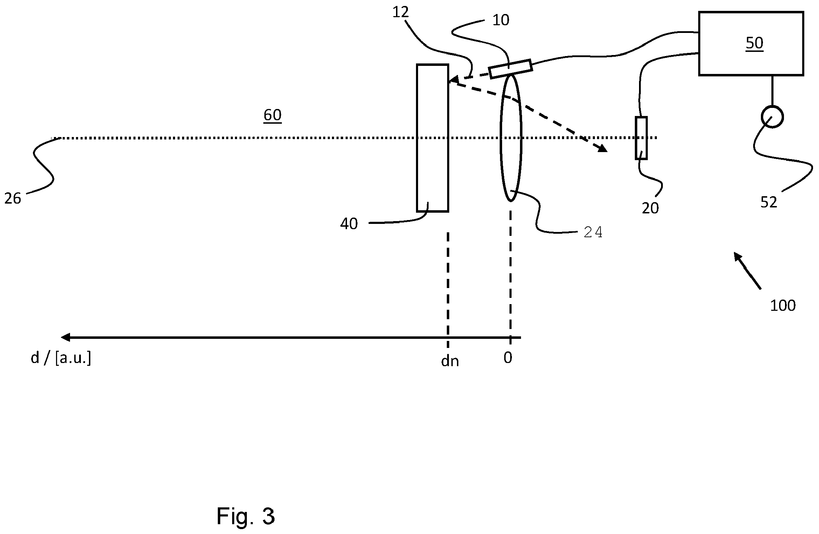

Figur 3 zeigt den optischen Sensor 100 aus Figur 1, wobei sich das Objekt 40 in einem deutlich kleineren Abstand dn vor dem optischen Sensor 100 befindet. Wegen der Geometrie der Anordnung können dabei von dem Objekt 40 zurückgestrahlte Lichtpulse 22 den Detektor 20 nicht mehr oder jedenfalls nur noch teilweise erreichen. Auch in dieser Hinsicht ermöglicht die hier beschriebene Erfindung eine Verbesserung.

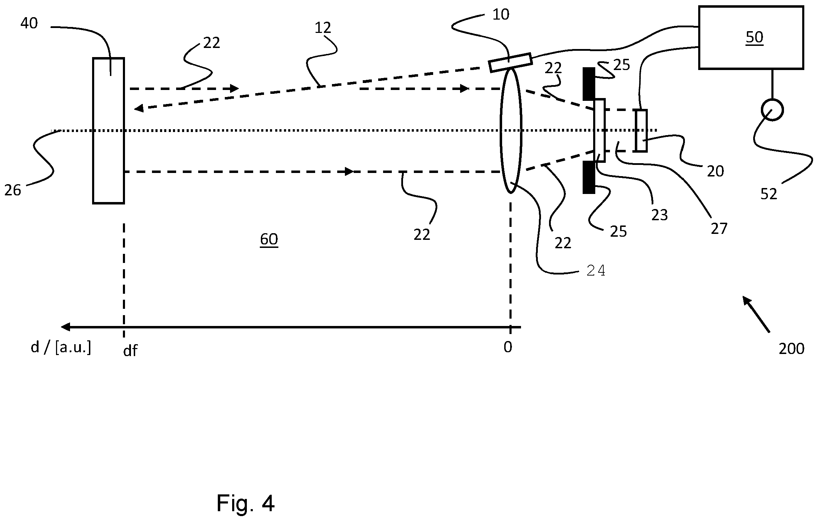

Figur 4 zeigt ein Ausführungsbeispiel eines erfindungsgemäßen optischen Sensors 200 in einer Messsituation, die der Figur 1 entspricht. Zusätzlich zu den in Figur 1 vorhandenen Komponenten weist der erfindungsgemäße optische Sensor 200 einen Diffusor 23 auf. In dem gezeigten Ausführungsbeispiel ist der Diffusor 23 im Strahlengang zwischen der Empfangsoptik 24 und dem Detektor 20 angeordnet. Die Wirkung des Diffusors 23 besteht im Wesentlichen darin, dass das auf die Empfangsoptik 24 einkommende nachzuweisende Licht 22 überführt wird in ein homogeneres Strahlenbündel 27, sodass das nachzuweisende Licht gleichmäßiger auf die aktive Fläche des Detektors 20 verteilt wird. Die systematische Messunsicherheit, die aus einer inhomogenen Ausleuchtung einer aktiven Detektorfläche herrührt, kann so reduziert werden. In dem konkreten Ausführungsbeispiel der Figur 4 kann der Diffusor 23 verwirklicht sein durch eine oder mehrere der oben erläuterten Komponenten, beispielsweise also durch eine Streuscheibe, eine holographisch hergestellte Komponente oder ein Mikrolinsenarray.

Durch die Wirkung des Diffusors 23 kann das auf den Detektor 20 einfallende Strahlenbündel eine geringere Konvergenz aufweisen als das auf den Diffusor 23 einkommende Strahlenbündel.

Besonders bevorzugt ist der Querschnitt des Lichtbündels in welches das nachzuweisende Licht 22 durch die Wirkung des Diffusors 23 überführt wird, an die Form der Detektorfläche 70 angepasst.

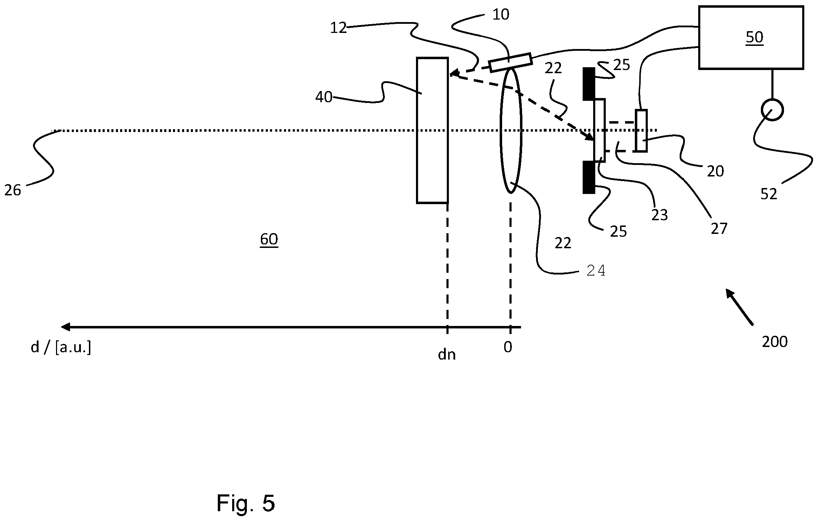

Eine weitere vorteilhafte Wirkung der vorliegenden Erfindung wird mit Bezug auf Figur 5 erläutert, die das Ausführungsbeispiel der Figur 4 in einer der Figur 3 entsprechenden Messsituation zeigt. Im Unterschied zur Figur 3, wo die von dem Objekt 40 zurückgestrahlten Lichtpulse 22 den Detektor nicht mehr oder jedenfalls nur noch zu einem sehr geringen Teil erreichen, führt bei dem erfindungsgemäßen optischen Sensor 200 der Diffusor 23, wie in Figur 5 veranschaulicht, dazu, dass auch diese Lichtpulse noch nachgewiesen werden können. Der Querschnitt des Lichtbündels 27 mag zwar kleiner sein als im Vergleich zu Figur 4, wichtig ist aber, dass ein Nachweis des Objekts 40 im Unterschied zum Stand der Technik (Figur 3) auch in dem Abstand dn noch möglich ist. Durch die geringe Distanz zum Objekt ist eine extrem hohe Signalintensität vorhanden. Das Objekt kann somit trotz des geringen Lichtbündelquerschnitts nicht nur nachgewiesen, sondern sehr gut ausgemessen werden. Durch den Diffusor/Blende ist es hier möglich die starke Übersteuerung von Objekten im Nahbereich zu mildern. Der Nahbereich des optischen Sensors 200 kann also im Vergleich zum Stand der Technik vergrößert werden in dem Sinn, dass auch Objekte in einem kürzeren Abstand vor dem optischen Sensor nachgewiesen werden können.

Die Wirkung des Diffusors 23 besteht, wie in Figur 5 ersichtlich, also insbesondere auch darin, dass noch Lichtstrahlen, die in einem vergleichsweise großen Winkel zur optischen Achse 26 auf die Empfangsoptik 24 eingehen, noch nachgewiesen werden können. Um zu vermeiden, dass dabei auch nichterwünschtes Streulicht auf den Detektor 20 gelangt, ist im Ausführungsbeispiel der Figuren 4 und 5 vor dem Diffusor 23 eine Blende 25, die insbesondere elektronisch einstellbar sein kann, vorhanden. Beispielsweise kann die Blende 25 verwirklicht sein durch ein Flüssigkristall-Array. Mit der Blende 25 wird eine effektive Apertur der Detektion begrenzt.

Mit der vorliegenden Erfindung wird eine neuartige Verbesserung für optische Sensoren nach dem Laufzeitprinzip vorgeschlagen, die eine Reduzierung der systematischen Messunsicherheit aufgrund inhomogener Ausleuchtung des Detektors ermöglicht. Die erfindungsgemäße Lösung kann insbesondere bei vorhandenen optischen Sensoren nachgerüstet werden.

### Bezugszeichenliste

- 10: Sender
- 12: Licht, Sendelicht
- 20: Detektor
- 22: vom Objekt 40 zurückgestrahlte Lichtpulse, nachzuweisendes Licht
- 23: Diffusor
- 24: Empfangsoptik
- 25: Blende
- 26: optische Achse
- 27: Lichtstrahl des nachzuweisenden Lichts strahlabwärts von dem Diffusor 23
- 40: Objekt
- 50: Steuer- und Auswerteeinheit
- 52: Schnittstelle der Steuer- und Auswerteeinheit, insbesondere Busschnittstelle
- 60: Überwachungsbereich
- 70: aktive Fläche des Detektors 20
- 71: erster Bonddraht
- 72: zweiter Bonddraht
- 73: Ringelektrode
- 100: optischer Sensor (Stand der Technik)
- 200: erfindungsgemäßer optischer Sensor
- d: Entfernung eines Objekts
- dn: Entfernung eines Objekts im Nahbereich
- df: Entfernung eines Objekts im Fernbereich
- a.u.: beliebige Einheiten
- S1: erster Lichtfleck
- S2: zweiter Lichtfleck
- S3: dritter Lichtfleck
- Z1: Impedanz
- Z2: Impedanz
- Z3: Impedanz
- Z4: Impedanz

## Patentansprüche

1. Optischer Sensor zum Nachweisen von Objekten in einem Überwachungsbereich
mit einem Sender (10) zum Aussenden von Licht (12), insbesondere von Lichtpulsen, in den Überwachungsbereich (60),
mit einem Detektor (20) zum Nachweisen von von einem Objekt (40) im Überwachungsbereich (60) zurückgestrahltem Licht (22), insbesondere von Lichtpulsen,
mit einer Steuer- und Auswerteeinheit (50) zum Ansteuern des Senders (10), zum Auswerten des von dem Detektor (20) nachgewiesenen Lichts (22) und zum Ermitteln einer Entfernung (d) des Objekts (40) nach dem Laufzeitprinzip,
**dadurch gekennzeichnet,**
**dass** strahlaufwärts vor dem Detektor (20) ein Diffusor (23) vorhanden ist.

2. Optischer Sensor nach Anspruch 1,
**dadurch gekennzeichnet,**
**dass** der Diffusor (23) von dem zu detektierenden Licht (22) durchstrahlt wird.

3. Optischer Sensor nach Anspruch 1 oder 2,
**dadurch gekennzeichnet,**
**dass** das zu detektierende Licht von dem Diffusor zurückgestrahlt wird.

4. Optischer Sensor nach einem der Ansprüche 1 bis 3,
**dadurch gekennzeichnet,**
**dass** der Diffusor (23) im Strahlengang zwischen einer Empfangsoptik (24) und dem Detektor (20) angeordnet ist.

5. Optischer Sensor nach einem der Ansprüche 1 bis 4,
**dadurch gekennzeichnet,**
**dass** ein Strahlengang des nachzuweisenden Lichts (22) strahlabwärts von dem Diffusor (23) eine kleinere Konvergenz aufweist als strahlaufwärts von dem Diffusor (23).

6. Optischer Sensor nach einem der Ansprüche 1 bis 5,
**dadurch gekennzeichnet,**
**dass** der Diffusor (23) einkommendes Licht (22) in einen Lichtstrahl (27) überführt, dessen Querschnitt an die Form der Detektorfläche (70) angepasst ist.

7. Optischer Sensor nach einem der Ansprüche 1 bis 6,
**dadurch gekennzeichnet,**
**dass** der Diffusor (23) eine Streuscheibe ist oder aufweist.

8. Optischer Sensor nach einem der Ansprüche 1 bis 7,
**dadurch gekennzeichnet,**
**dass** der Diffusor (23) teilweise oder vollständig an einer Seite einer Empfangsoptik (24), insbesondere einer Linse, gebildet ist.

9. Optischer Sensor nach einem der Ansprüche 1 bis 8,
**dadurch gekennzeichnet,**
**dass** der Diffusor (23) ein Mikrolinsenarray ist oder aufweist.

10. Optischer Sensor nach Anspruch 9,
**dadurch gekennzeichnet,**
**dass** die Linsen des Mikrolinsenarrays unregelmäßig in einer Ebene angeordnet sind.

11. Optischer Sensor nach Anspruch 9 oder 10,
**dadurch gekennzeichnet,**
**dass** die Linsen des Mikrolinsenarrays unterschiedliche Brennweiten und/oder nichtparallele optische Achsen aufweisen.

12. Optischer Sensor nach einem der Ansprüche 1 bis 11,
**dadurch gekennzeichnet,**
**dass** der Diffusor (23) teilweise oder vollständig holographisch gebildet ist und insbesondere eine teilweise oder vollständig holographisch gebildete Oberflächenstruktur aufweist.

13. Optischer Sensor nach einem der Ansprüche 1 bis 12,
**dadurch gekennzeichnet,**
**dass** der Diffusor (23) aus Kunststoff gebildet ist.

14. Optischer Sensor nach einem der Ansprüche 1 bis 13,
**dadurch gekennzeichnet,**
**dass** der Diffusor (23) ein lichtformender Diffusor ist.

15. Optischer Sensor nach einem der Ansprüche 1 bis 14,
**dadurch gekennzeichnet,**
**dass** im Strahlengang vor dem Detektor (23), insbesondere strahlaufwärts vor Diffusor (23) und insbesondere zwischen einer Empfangsoptik und dem Diffusor (23), eine Blende (25) vorhanden ist.

16. Optischer Sensor nach Anspruch 15,
**dadurch gekennzeichnet,**
**dass** die Blende (25) einstellbar ist, insbesondere elektronisch einstellbar ist.

17. Optischer Sensor nach Anspruch 15 oder 16,
**dadurch gekennzeichnet,**
**dass** die Blende (25) ein steuerbares LCD-Element aufweist.
